# FASCICULE DE BREVET EUROPEEN

(11) **EP 0 484 205 B1**
(45) Date de publication et mention de la délivrance du brevet: **20.12.1995**
(21) Numéro de dépôt: 91402830.3
(22) Date de dépôt: 23.10.1991
(51) Int. Cl.: B60H 1/00

(54) **Dispositif de chauffage et de ventilation de l'habitacle d'un véhicule automobile**
Vorrichtung zur Heizung und Belüftung des Fahrgastraums eines Kraftfahrzeugs
Heating and ventilating device for a motor vehicle interior

(30) Priorité: 31.10.1990 FR 9013568
(43) Date de publication de la demande: 06.05.1992
(73) Titulaire: VALEO THERMIQUE HABITACLE, 78320 Le Mesnil-Saint-Denis (FR)
(72) Inventeur: Robin, Roger, F-78990 Elancourt (FR); Bouvot, Jean-François, F-78720 Dampierre (FR)
(74) Mandataire: Gamonal, Didier

(56) Documents cités:
- EP-A- 0 102 611
- DE-A- 1 455 640
- DE-A- 2 655 554
- FR-A- 2 631 287
- US-A- 4 223 754

## Description

L'invention concerne un dispositif de chauffage et de ventilation de l'habitacle d'un véhicule automobile.

On connaît déjà par le document DE-A-2 655 554 des dispositifs de ce genre qui comprennent : une conduite d'admission d'air froid ; un circuit d'admission et de réchauffage relié à la conduite d'admission d'air froid et propre à produire un flux d'air froid ou réchauffé ; un circuit de distribution relié au circuit d'admission et de réchauffage et comprenant une entrée pour le flux d'air froid ou réchauffé, ainsi que des conduites de sortie d'air alimentées par cette entrée d'air et propres à distribuer, par des moyens de distribution, le flux d'air en différentes zones de l'habitacle, l'une au moins desdites conduites de sortie débouchant derrière le pare-brise pour son désembuage.

De tels dispositifs sont utilisés habituellement pour le chauffage et la ventilation - et éventuellement la climatisation - de l'habitacle des véhicules automobiles. Ils servent alors à envoyer de l'air froid ou réchauffé en différentes zones de l'habitacle grâce aux conduites de sortie précitées. Généralement ces dernières sont au nombre de trois et comprennent : la conduite de sortie précitée desservant des bouches de désembuage/dégivrage du pare-brise, une conduite desservant des aérateurs au niveau de la planche de bord et une conduite desservant une bouche en partie inférieure de l'habitacle.

L'air froid provenant de l'extérieur de l'habitacle ou éventuellement d'un groupe de climatisation, est ajusté en température par le circuit d'admission et de réchauffage avant d'être réparti dans l'habitacle.

Par ailleurs, ces dispositifs comprennent, de façon en soi connue, un groupe moto-ventilateur disposé en amont de la conduite d'admission d'air froid pour régler la vitesse du flux d'air qui est envoyé dans l'habitacle.

La plupart des dispositifs de ce type comprennent des organes de commande manuelle, mécanique ou électrique pour régler la température du flux d'air, sa distribution entre les différentes conduites de sortie et aussi sa vitesse de ventilation.

Bien que ces dispositifs donnent généralement satisfaction, ils présentent certains inconvénients.

Ainsi, dans le cas où le conducteur constate la présence de buée ou de givre sur le pare-brise du véhicule, il doit manoeuvrer les organes de commande pour modifier à la fois le réglage de la température du flux d'air, son mode de distribution et aussi sa vitesse de ventilation, c'est-à-dire qu'il doit agir quasi simultanément sur trois commandes différentes. Ceci risque de distraire le conducteur de sa conduite, au détriment de la sécurité aggravé par le fait qu'il doit faire front à une mauvaise visibilité.

Ensuite, lorsque la buée a disparu, il doit à nouveau manoeuvrer les mêmes organes de commande pour retrouver les réglages initiaux correspondant à la situation de confort voulue par le conducteur.

Cette opération risque aussi de distraire le conducteur de sa conduite, et cela d'autant plus que les réglages initiaux ne sont pas mémorisables sur les dispositifs à commande manuelle, mécanique ou électrique, ce qui l'obligera à se remémorer les positions initiales des organes de commande.

L'invention a notamment pour but de rémédier aux inconvénients précités.

Elle propose, à cet effet, un dispositif de chauffage et de ventilation du type défini en introduction qui, conformément à l'invention, comprend une conduite de désembuage supplémentaire, séparée du circuit de distribution, dite conduite de désembuage prioritaire et possédant une entrée communiquant avec le circuit d'admission et de réchauffage et une sortie débouchant derrière le pare-brise, un volet d'obturation déplaçable entre une position dite "désembuage prioritaire" où il obture l'entrée du circuit de distribution et une position dite "utilisation normale" où il obture l'entrée de la conduite de désembuage prioritaire, et des moyens de commande de déplacement du volet d'obturation entre les deux positions précitées.

Ainsi, dans la position "utilisation normale", le flux d'air froid ou réchauffé est réparti entre les conduites de sortie du circuit de distribution grâce aux moyens de distribution, tandis que la conduite de désembuage prioritaire est rendue totalement inopérante.

Dans la position dite "désembuage prioritaire", le flux d'air froid ou réchauffé s'écoule par la conduite de "désembuage prioritaire" pour déboucher derrière le pare-brise du véhicule, tandis que le circuit de distribution est rendu inopérant.

Lorsque le volet d'obturation est dans la position de "désembuage prioritaire", les différents réglages du dispositif de chauffage et de ventilation sont conservés, en particulier les réglages assurés par les moyens de distribution.

Par conséquent, lorsque le pare-brise est désembué ou dégivré et que le volet d'obturation est ramené dans sa position "utilisation normale", les réglages initiaux du dispositif de chauffage et de ventilation sont retrouvés.

Dans le cadre de l'invention, on désigne par le terme "désembuage" toute action propre à envoyer de l'air, de préférence réchauffé, derrière le pare-brise du véhicule pour assurer son désembuage ou son dégivrage, selon le cas.

Dans une première forme de réalisation de l'invention, le circuit d'admission et de réchauffage comprend une branche de transmission d'air froid interposée entre la conduite d'admission d'air froid et l'entrée du circuit de distribution; une branche de réchauffage d'air interposée entre la conduite d'admission d'air froid et l'entrée du circuit de distribution et contenant un échangeur de chaleur; et un volet de mixage propre à faire varier la répartition du débit d'air entre ces deux branches.

L'invention prévoit alors que le dispositif comprend en outre une admission auxiliaire d'air froid qui débouche directement dans la branche de réchauffage d'air en amont de l'échangeur de chaleur, ainsi qu'un volet auxiliaire d'obturation déplaçable entre une position de fermeture et une position d'ouverture de cette admission auxiliaire d'air froid.

De préférence, le volet auxiliaire d'obturation est déplaçable en synchronisme avec le volet d'obturation de manière à être en position d'ouverture lorsque le volet d'obturation est en position de désembuage prioritaire et en position de fermeture lorsque le volet d'obturation est en position d'utilisation normale.

Dans une seconde forme de réalisation de l'invention, le circuit d'admission et de réchauffage comprend une branche d'admission unique interposée entre la conduite de l'admission d'air froid et l'entrée du circuit de distribution, ladite branche d'admission contenant un échangeur de chaleur alimenté par un fluide caloporteur par l'intermédiaire d'un organe de réglage de débit.

L'invention prévoit alors que le dispositif comprend des moyens de commande dudit organe de réglage de débit qui sont synchronisés aux moyens de commande de déplacement du volet d'obturation, de sorte que le débit de fluide caloporteur à travers l'échangeur de chaleur soit augmenté lorsque le volet d'obturation est dans la position de désembuage prioritaire.

Dans une troisième forme de réalisation de l'invention, le circuit d'admission et de réchauffage comprend une branche de transmission d'air froid contrôlée par un volet de réglage de débit, et une branche de réchauffage contenant un échangeur de chaleur alimenté par un fluide caloporteur par l'intermédiaire d'un organe de réglage de débit, les deux branches précitées étant interposées entre, d'une part, la conduite d'admission d'air froid et, d'autre part, l'entrée d'air du circuit de distribution et l'entrée d'air de la conduite de désembuage.

Conformément à l'invention, le dispositif comprend en outre des moyens de commande du volet de réglage de débit d'air froid qui sont synchronisés avec les moyens de commande du volet d'obturation de sorte que le volet de réglage de débit d'air froid ferme la branche de transmission d'air froid lorsque le volet d'obturation est dans la position de désembuage prioritaire.

Selon une autre caractéristique de l'invention, le dispositif comprend une sonde propre à détecter la présence de buée ou de givre ou le risque d'apparition de buée ou de givre sur le pare-brise.

Cette sonde peut informer le conducteur, par exemple au moyen d'un voyant, que de la buée ou du givre se forme ou risque de se déformer derrière le pare-brise. Le conducteur aura alors à appuyer sur une touche commandant automatiquement les moyens de réglage du dispositif dans la position de désembuage prioritaire. En variante, le conducteur pourra avoir à déplacer un levier sur une position désembuage prioritaire.

Dans une forme de réalisation plus élaborée de l'invention, la sonde est reliée à un module électronique propre à commander le volet d'obturation et éventuellement d'autres moyens de commande synchronisés au volet d'obturation.

Ainsi, dans le cas où le dispositif comprend un pulseur d'air propre à envoyer de l'air froid au travers de la conduite d'admission d'air, le module électronique est propre à actionner la vitesse du pulseur à une valeur optimale, par exemple maximale, lorsque le volet d'obturation est dans la position de désembuage prioritaire.

Dans toutes les formes de réalisation de l'invention, la conduite d'admission d'air est avantageusement reliée à une bouche d'entrée d'air contrôlée par un volet d'entrée d'air déplaçable entre une position d'ouverture et une position de fermeture de cette bouche. Selon l'invention, le dispositif comprend en outre des moyens de commande du volet d'entrée d'air qui sont synchronisés aux moyens de commande du volet d'obturation de sorte que le volet d'entrée d'air soit obligatoirement en position d'ouverture lorsque le volet d'obturation est dans la position de dégivrage prioritaire.

Dans la description qui suit, faite seulement à titre d'exemple, on se réfère aux dessins annexés, sur lesquels:
- la Figure 1 est une vue en coupe d'un dispositif selon l'invention dans la première forme de réalisation précitée;
- la Figure 2 est une vue en coupe d'un dispositif selon l'invention dans la seconde forme de réalisation précitée;
- la Figure 3 est une vue en coupe montrant une installation équipée d'un dispositif selon la Figure 2;
- la Figure 4 est une vue en coupe d'un dispositif selon l'invention conformément à la troisième forme de réalisation précitée; et
- la Figure 5 représente schématiquement un circuit de commande d'un pulseur d'air propre à faire partie d'un dispositif selon l'invention.

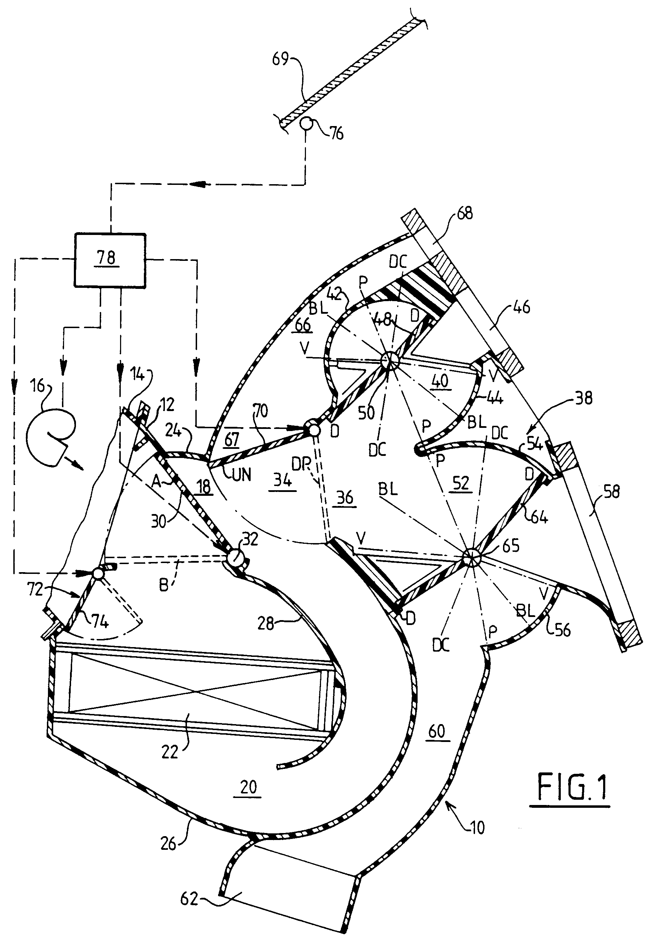

Le dispositif représenté sur la Figure 1 comprend un boîtier 10 comportant une conduite d'admission d'air froid 12 qui est raccordée à l'embout de sortie 14 d'un groupe moto-ventilateur (non représenté) équipé d'un pulseur 16 propre à envoyer dans la conduite d'admission 12 de l'air froid provenant de l'extérieur de l'habitacle du véhicule ou éventuellement d'un groupe de climatisation.

La conduite d'admission 12 est reliée à un circuit d'admission et de réchauffage comprenant une branche de transmission d'air froid 18 et une branche de réchauffage d'air 20 qui présente une configuration en U et qui contient un échangeur de chaleur 22 qui est, par exemple, alimenté en permanence par le fluide de refroidissement du moteur du véhicule. La branche 18 est limitée extérieurement par une portion de paroi 24, tandis que la branche 20 est limitée extérieurement par une portion de paroi incurvée 26. La branche 20 constitue ainsi une sorte de poche qui comprend intérieurement une paroi 28 pour y définir une circulation en U. La branche de transmission d'air froid 18 s'étend de façon directe entre les deux extrémités de la branche de réchauffage 20 en forme de U.

Le dispositif comprend en outre un volet de mixage 30 monté en rotation autour d'un axe 32 et disposé à la jonction de la conduite d'admission 12 et des branches 18 et 20 pour faire varier la répartition, entre ces deux branches, du débit d'air arrivant par la conduite d'admission 12 et, par conséquent, la température de l'air à la sortie des branches 18 et 20. Le volet de mixage 30 est déplaçable entre une position A (représentée en trait plein) où l'air circule uniquement dans la branche de réchauffage d'air 20 et une position B (représentée en trait interrompu) où l'air circule uniquement à travers la branche de transmission d'air froid 18, tout en pouvant prendre toute position intermédiaire. Les branches 18 et 20 communiquent entre elles, à leur sortie, par une zone de mixage 34 destinée à assurer le mélange de l'air froid provenant de la branche 18 et de l'air chaud provenant de la branche 20. Le flux d'air froid ou réchauffé ainsi obtenu à la sortie du circuit d'admission et de réchauffage peut pénétrer à l'entrée 36 d'un circuit de distribution 38.

Le circuit 38 comprend une première conduite de sortie 40 limitée principalement par deux tronçons de parois cylindriques 42 et 44 et desservant au moins une bouche de désembuage/dégivrage 46 pour envoyer de l'air froid ou réchauffé derrière le pare-brise 69 du véhicule. La distribution de l'air à travers la conduite 40 est contrôlée par un volet de distribution 48 monté en rotation autour d'un axe 50.

Le circuit 38 comprend en outre une seconde conduite de sortie 52 limitée principalement par deux portions de paroi cylindriques 54 et 56 et desservant au moins une bouche d'aération 58 disposée au niveau de la planche de bord du véhicule.

Le circuit 38 comprend en outre une troisième conduite de sortie 60 qui dessert une bouche de sortie 62 en partie inférieure de l'habitacle.

Un second volet de distribution 64 monté en rotation autour d'un axe 65 est prévu pour contrôler la distribution de l'air à travers les conduites de sortie 52 et 60. Les volets 48 et 64 sont synchronisés entre eux de manière à pouvoir prendre cinq positions différentes identifiées respectivement par les symboles V (ventilation), BL (bi-level, c'est-à-dire stratification de température), P (pieds), DC (dégivrage-chauffage) et D (dégivrage).

Le dispositif, tel qu'il vient d'être décrit précédemment est d'une structure générale connue.

Conformément à l'invention, le dispositif comprend en outre une conduite de désembuage 66, encore appelée conduite de "désembuage prioritaire", qui est séparée du circuit de distribution 38. La conduite 66 possède une entrée 67 qui communique avec le circuit d'admission de réchauffage, et plus particulièrement avec la zone de mixage 34, ainsi qu'une sortie 68 débouchant derrière le pare-brise 69, à proximité de la bouche de sortie 46.

Le dispositif comprend en outre un volet d'obturation 70 déplaçable entre une position dite "désembuage prioritaire" ou "DP" (représenté en trait interrompu sur la Figure 1) où il obture l'entrée 36 du circuit de distribution 38 et une position dite "utilisation normale" ou "UN" (représenté en trait plein sur la Figure 1) où le volet obture l'entrée 67 de la conduite 66. Le déplacement du volet 70 entre les deux positions précitées peut être fait par des moyens de commande manuels, mécaniques, ou électriques tels que par l'intermédiaire d'un micromoteur (non représenté).

Ainsi, dans la position d'utilisation normale, le flux d'air froid ou réchauffé pénètre par l'entrée 36 du circuit de distribution et peut être réparti entre les différentes conduites de sortie grâce aux deux volets de distribution 48 et 64.

Si le pare-brise 69 doit être désembué ou dégivré, on manoeuvrent le volet 70 pour l'amener dans la position de dégivrage prioritaire (DP) et le flux d'air est amené directement derrière le pare-brise grâce à la conduite 66, sans qu'il soit nécessaire de modifier le réglage des volets de distribution.

Le dispositif de l'invention comprend en outre une admission auxiliaire d'air froid 72 qui est adjacente à la conduite d'admission 12 et qui débouche directement dans la branche de réchauffage d'air 20, en amont de l'échangeur de chaleur 22. Il est prévu en outre un volet auxiliaire d'obturation 74 déplaçable entre une position de fermeture (représentée en trait plein) où il obture l'arrivée auxiliaire 72 et une position d'ouverture (représentée en trait interrompu) où il n'obture pas l'admission auxiliaire 72.

Selon l'invention, le volet auxiliaire d'obturation 72 est déplaçable en synchronisme avec le volet d'obturation 70 de manière à être en position d'ouverture lorsque le volet d'obturation est en position de désembuage prioritaire (DP) et en position de fermeture lorsque le volet d'obturation est en position d'utilisation normale (UN).

La synchronisation des volets 70 et 72 peut être effectuée par des moyens mécaniques classiques et le déplacement synchronisé des deux volets peut être réalisé manuellement ou bien par l'intermédiaire d'un micromoteur.

Dans une forme de réalisation élaborée de l'invention, comme représentée à la Figure 1, le dispositif comprend une sonde 76 placée derrière le pare-brise 69 et propre à détecter la présence ou le risque d'apparition de buée ou de givre derrière le pare-brise. Cette sonde est reliée à un module électronique 78 propre à commander le déplacement synchronisé des volets 70 et 72 ainsi que, le cas échéant, la commande du pulseur d'air 16 pour l'amener à une vitesse augmentée.

En fonctionnement normal, le volet 70 obture l'entrée 67 de la conduite 66, tandis que le volet 74 obture l'admission auxiliaire 72. La température du flux d'air pénétrant dans le circuit de distribution est ajustée au moyen du volet de réglage 30 et la distribution de ce flux est assurée par les volets de distribution 48 et 64.

Si la sonde 76 détecte la présence ou le risque d'apparition de buée ou de givre derrière le pare-brise 69, le module 78 agit sur les volets 70 et 74 pour les amener dans la position dite de dégivrage prioritaire où le volet 70 obture l'entrée 36 du circuit de distribution et le volet 74 libère l'admission auxiliaire 72. Ainsi, tout l'air réchauffé est envoyé dans la conduite de dégivrage prioritaire 66. Quelle que soit la position du volet de mixage 30, de l'air pénètre toujours dans la branche de réchauffage 20, grâce à l'admission auxiliaire 72. Avantageusement, le module électronique est réglé de telle façon que la vitesse de ventilation du pulseur 16 soit alors augmentée en gardant en mémoire la vitesse initiale du pulseur.

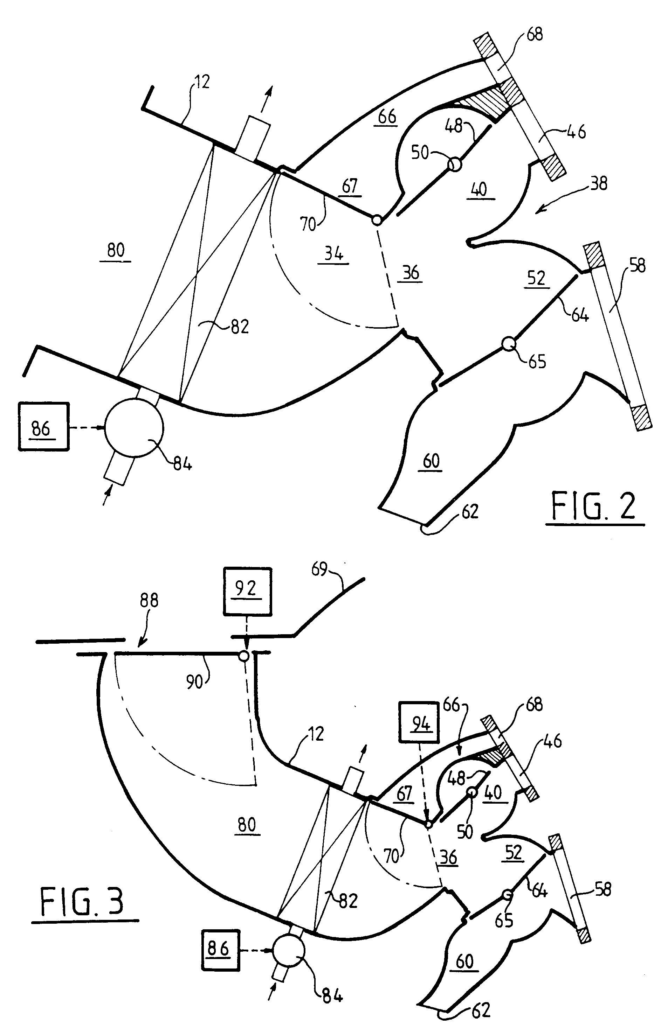

On se réfère maintenant à la forme de réalisation de la Figure 2 qui diffère de celle de la Figure 1, uniquement par ta structure du circuit d'admission et de réchauffage.

Dans la forme de réalisation de la Figure 2, ce circuit comprend une branche d'admission unique 80 interposée entre la conduite d'admission d'air froid 12 et la zone 34 qui débouche à la fois sur l'entrée 36 du circuit de distribution 38 et sur l'entrée 67 de la conduite de désembuage 66.

La branche d'admission 80 contient un échangeur de chaleur 82 alimenté par un fluide caloporteur (par exemple le fluide de refroidissement du moteur du véhicule) par l'intermédiaire d'un organe de réglage de débit 84, tel qu'une électrovanne. En fonction du réglage de l'organe 84, le flux d'air propre à alimenter le circuit 38 ou la conduite 64 est réglé en température. Selon l'invention, le dispositif comprend des moyens de commande 86 de l'organe de réglage de débit 84, qui sont synchronisés aux moyens de commande du déplacement du volet d'obturation 70 de sorte que le débit de fluide caloporteur à travers l'échangeur de chaleur soit augmenté, ou maintenu à la valeur maximale lorsque le volet d'obturation est dans la position de désembuage prioritaire (représentée en trait interrompu sur la figure 2). Les moyens de commande 86 sont pilotés par exemple par le module électronique 78 qui gardera en mémoire la consigne initiale des moyens 86.

Comme montré à la Figure 3, la conduite d'admission d'air 12 est reliée à une bouche d'entrée d'air 88 contrôlée par un volet d'entrée d'air 90 déplaçable entre une position de fermeture (représentée en trait plein) de la bouche et une position d'ouverture (représentée en trait interrompu) de cette bouche. La bouche 88 est ménagée au travers de la carrosserie du véhicule automobile et permet d'alimenter le dispositif en air frais prélevé à partir de l'extérieur de l'habitacle.

Le dispositif comprend en outre des moyens 92 de commande du volet d'entrée d'air 90, qui sont synchronisés aux moyens de commande 94 du volet d'obturation 70 de sorte que le volet d'entrée d'air 90 soit obligatoirement en position d'ouverture (représentée en trait interrompu) lorsque le volet d'obturation est dans la position de dégivrage prioritaire (représentée en trait interrompu). De préférence, les moyens de commande 92 et 94 sont également synchronisés aux moyens de commande 86 de l'organe de réglage de débit 84. Ainsi, dans la position de dégivrage prioritaire, l'organe 84 est réglé de manière telle que le fluide caloporteur qui traverse l'échangeur de chaleur 82 soit à une température augmentée, ou maintenue à la valeur maximale.

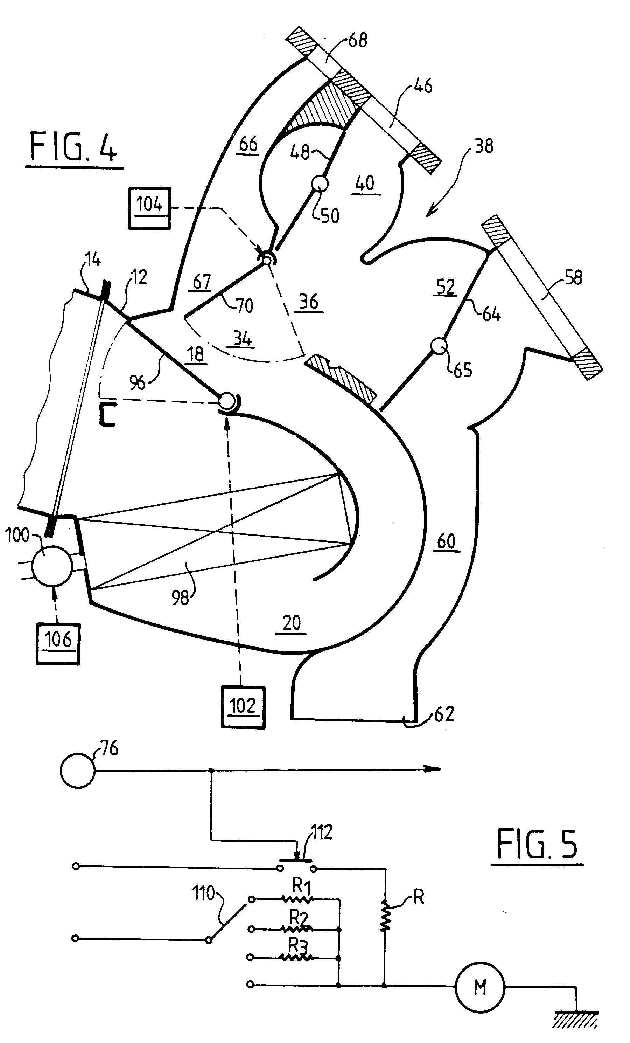

On se réfère maintenant à la Figure 4 qui montre une troisième forme de réalisation du dispositif de l'invention, qui diffère de celle de la Figure 1 par la structure du circuit d'admission et de réchauffage.

Dans cette forme de réalisation, le circuit d'admission et de réchauffage comprend une branche de transmission d'air froid 18 contrôlée par un volet de réglage de débit 96 et une branche de réchauffage d'air 20 contenant un échangeur de chaleur 98 alimenté par un fluide caloporteur par l'intermédiaire d'un organe de réglage de débit 100.

Les branches 18 et 20 sont reliées, d'une part, à la conduite d'admission 12 et, d'autre part, à la zone 34 alimentant à la fois l'entrée 36 dudit circuit de distribution 38 et l'entrée 67 de la branche de désembuage prioritaire 66.

Le dispositif comprend des moyens 102 de commande du volet de réglage de débit d'air froid 96 et des moyens de commande 104 du volet d'obturation 70.

Là encore, les moyens de commande 104 sont avantageusement synchronisés avec les moyens de commande 106 de l'organe de réglage de débit 100 pour que, dans la position de désembuage prioritaire, la température du fluide caloporteur traversant l'échangeur de chaleur 98 soit augmentée, ou maintenue à la valeur maximale.

En toutes les formes de réalisation précitées, il est possible d'utiliser, comme décrit à la Figure 1, une sonde placée derrière le pare-brise pour détecter la présence ou le risque d'apparition de buée derrière le pare-brise et commander automatiquement le déplacement du volet d'obturation dans la position de désembuage prioritaire.

Dans des formes de réalisation moins élaborées, la sonde peut simplement allumer un voyant pour signaler au conducteur qu'il doit agir sur une commande propre à amener le dispositif dans la position de dégivrage prioritaire. Il peut s'agir d'une commande manuelle ou encore d'une commande agissant sur des micromoteurs commandant les différents organes de réglage du dispositif.

Comme indiqué précédemment, il est préférable que, dans la position de désembuage prioritaire, la vitesse du pulseur d'air 16 (Fig. 1) soit augmentée.

Comme montré à la Figure 5, le pulseur d'air comprend un moteur électrique M pouvant prendre quatre vitesses différentes en étant alimenté directement ou au travers de trois résistances R1, R2 et R3 de valeurs différentes qui peuvent être mises en circuit sélectivement par l'intermédiaire d'un rhéostat 110. La sonde 76 peut alors augmenter ou maintenir à la valeur maximale la vitesse du moteur en agissant sur un contacteur 112 pour mettre le moteur en circuit avec une résistance R de valeur appropriée.

Dans la forme de réalisation la plus élaborée du dispositif de l'invention, le module électronique associé à la sonde peut réaliser les opérations suivantes:
- augmenter, ou maintenir à la valeur maximale, la vitesse du pulseur d'air;
- agir sur des motoréducteurs de commande du ou des volets du dispositif pour les actionner;
- agir sur l'électrovanne de l'organe de réglage de débit de l'échangeur de chaleur (lorsqu'il s'agit d'un échangeur du type à robinet) pour augmenter le débit du fluide caloporteur;
- agir sur l'entrée d'air par l'intermédiaire d'une électrovanne, s'il s'agit d'un volet de recyclage.

## Revendications

1. Dispositif de chauffage et de ventilation de l'habitacle d'un véhicule automobile, comprenant une conduite d'admission d'air froid (12) ; un circuit d'admission et de réchauffage (18, 20 ; 80) relié à la conduite d'admission d'air froid (12) et propre à produire un flux d'air froid ou réchauffé ; un circuit de distribution (38) relié au circuit d'admission et de réchauffage et comprenant une entrée (36) pour le flux d'air froid ou réchauffé, des conduites de sortie d'air telles qu'une conduite de désembuage (40), une conduite d'aération (52) et une conduite (60) pour la partie inférieure de "habitacle" alimentées par cette entrée d'air (36) et propres à distribuer, par des moyens de distribution (48, 64) le flux d'air en différentes zones de l'habitacle, la conduite de désembuage (40) débouchant derrière le pare-brise (69) du véhicule pour son désembuage, caractérisé en ce qu'il comprend une conduite de désembuage supplémentaire (66), séparée du circuit de distribution (38), dite conduite de désembuage prioritaire et possédant une entrée (67) communiquant avec le circuit d'admission et de réchauffage et une sortie (68) débouchant derrière le pare-brise (69), un volet d'obturation (70) déplaçable entre une position dite "désembuage prioritaire" où il obture l'entrée (36) du circuit de distribution et une position dite "utilisation normale" où il obture l'entrée (67) de la conduite de désembuage prioritaire (66), et des moyens de commande de déplacement du volet d'obturation (70) entre les deux positions précitées.

2. Dispositif selon la revendication 1, dans lequel le circuit d'admission et de réchauffage comprend une branche de transmission d'air froid (18) interposée entre la conduite d'admission d'air froid (12) et l'entrée (36) du circuit de distribution (38) ; une branche de réchauffage d'air (20) interposée entre la conduite d'admission d'air froid (12) et l'entrée (36) du circuit de distribution et contenant un échangeur de chaleur (22) ; et un volet de mixage (30) propre à faire varier la répartition entre ces deux branches (18, 20) du débit d'air, caractérisé en ce qu'il comprend une admission auxiliaire d'air froid (72) qui débouche directement dans la branche de réchauffage d'air (20) en amont de l'échangeur de chaleur (22), ainsi qu'un volet auxiliaire d'obturation (74) déplaçable entre une position de fermeture de l'admission auxiliaire (72) et une position d'ouverture de cette admission (72).

3. Dispositif selon la revendication 2, caractérisé en ce que le volet auxiliaire d'obturation (74) est déplaçable en synchronisme avec le volet d'obturation (70) de manière à être en position d'ouverture lorsque le volet d'obturation est en position de désembuage prioritaire et en position de fermeture lorsque le volet d'obturation est en position d'utilisation normale.

4. Dispositif selon la revendication 1, dans lequel le circuit d'admission et de réchauffage comprend une branche d'admission unique (80) interposée entre la conduite d'admission d'air froid (12) et l'entrée (36) du circuit de distribution (38), ladite branche d'admission (80) contenant un échangeur de chaleur (82) alimenté par un fluide caloporteur par l'intermédiaire d'un organe de réglage de débit (84), caractérisé en ce qu'il comprend des moyens (86) de commande dudit organe de réglage de débit (84) qui sont synchronisés aux moyens de commande de déplacement du volet d'obturation (70) de sorte que le débit de fluide caloporteur à travers l'échangeur de chaleur (82) soit augmenté, ou maintenu à la valeur maximale lorsque le volet d'obturation (70) est dans la position de désembuage prioritaire.

5. Dispositif selon l'une des revendications 1 à 4, caractérisé en ce qu'il comprend une sonde (76) propre à détecter la présence de buée ou le risque d'apparitions de buée sur le pare-brise (69).

6. Dispositif selon la revendication 5, caractérisé en ce que la sonde (76) est reliée à un module électronique (78) propre à commander le volet d'obturation (70) et éventuellement d'autres moyens de commande synchronisés au volet d'obturation.

7. Dispositif selon la revendication 6, comprenant en outre un pulseur d'air (16) propre à envoyer de l'air froid au travers de la conduite d'admission (12), caractérisé en ce que le module (78) est propre à actionner la vitesse de pulseur (16) à une valeur augmentée, ou maintenue à la valeur maximale lorsque le volet d'obturation (70) est dans la position de désembuage prioritaire.

8. Dispositif selon l'une des revendications précédentes, dans lequel la conduite d'admission d'air (12) est reliée à une bouche d'entrée d'air (88) contrôlée par un volet d'entrée d'air (90) déplaçable entre une position de fermeture et une position d'ouverture de ladite bouche (88), caractérisé en ce qu'il comprend des moyens (92) de commande du volet d'entrée d'air (90) qui sont synchronisés aux moyens de commande (94) du volet d'obturation (70) de sorte que le volet d'entrée d'air (90) soit obligatoirement en position d'ouverture lorsque le volet d'obturation (70) est dans la position de dégivrage prioritaire.

## Claims

1. A heating and ventilating apparatus for the cabin of a motor vehicle, comprising a cold air admission duct (12); an admission and heating circuit (18, 20; 80) which is connected to the cold air admission duct (12) and which is adapted to produce a flow of cold or heated air; a distribution circuit (38) which is connected to the admission and heating circuit and which comprises an inlet (36) for the cold or heated air stream, air outlet ducts such as a demisting duct (40), a ventilating duct (52) and a duct (60) for the lower part of the "cabin", which are supplied through the said air inlet (36) and which are adapted to distribute the air stream into different zones of the cabin via distribution means (48, 64), with the demisting duct (40) exhausting behind the windscreen (69) of the vehicle for demisting thereof, characterised in that it includes a supplementary demisting duct (66) separate from the distribution circuit (38), namely a priority demisting duct having an inlet (67) communicating with the admission and heating circuit, and an outlet (68) exhausting behind the windscreen (69), a shut-off valve (70) which is displaceable between a position called a "priority demisting position" in which it obturates the inlet (36) of the distribution circuit, and a position called a "normal use" position in which it obturates the inlet (67) of the priority demisting duct (67), and means for controlling the displacement of the shut-off valve (70) between the two said positions.

2. Apparatus according to Claim 1, in which the admission and heating circuit comprises a cold air transmission branch (18) which is interposed between the cold air admission duct (12) and the inlet (36) of the distribution circuit (38); an air heating branch (20) which is interposed between the cold air admission duct (12) and the inlet (36) of the distribution circuit and which contains a heat exchanger (22); and a mixing valve (30) for varying the distribution of the air stream between the two said branches (18, 20), characterised in that it comprises an auxiliary cold air admission port (72) which exhausts directly into the air heating branch (20) upstream of the heat exchanger (22), together with an auxiliary shut-off valve (74) which is displaceable between a position for closing the auxiliary admission port (72) and a position for opening the said admission port (72).

3. Apparatus according to Claim 2, characterised in that the auxiliary shut-off valve (74) is displaceable in synchronism with the shut-off valve (70), in such a way as to be in its open position when the shut-off valve is in its priority demisting position, and in its closed position when the shut-off valve is in its normal use position.

4. Apparatus according to Claim 1, in which the admission and heating circuit includes a single admission branch (80) interposed between the cold air admission duct (12) and the inlet (36) of the distribution circuit (38), the said admission branch (80) containing a heat exchanger (82) which is supplied with a heat transfer fluid through a flow regulating device (84), characterised in that it includes means (86) for controlling the said flow regulating device (84), which are synchronised with the means for controlling displacement of the shut-off valve (70) in such a way that the flow of heat transfer fluid through the heat exchanger (82) is increased to, or maintained at, the maximum value when the shut-off valve (70) is in the priority demisting position.

5. Apparatus according to one of Claims 1 to 4, characterised in that it includes a sensor (76) adapted to detect the presence of misting, or the danger of misting occurring, on the windscreen (69).

6. Apparatus according to Claim 5, characterised in that the sensor (76) is connected to an electronic module (78) which is adapted to control the shut-off valve (70) and, optionally, other control means synchronised with the shut-off valve.

7. Apparatus according to Claim 6, further including an air blower (16) which is arranged to deliver cold air through the admission duct (12), characterised in that the module (78) is adapted to cause the speed of the blower (16) to be increased to a higher value, or to be maintained at the maximum value, when the shut-off valve (70) is in the priority demisting position.

8. Apparatus according to one of the preceding Claims, in which the air admission duct (12) is connected to an air admission port (88) controlled by an air inlet valve (90), which is displaceable between a closed position and an open position of the said port (88), characterised in that it includes means (92) for controlling the air inlet valve (90), which are synchronised with the control means (94) for the shut-off valve (70) in such a way that the air inlet valve (90) is compelled to be in its open position when the shut-off valve (70) is in the priority deicing position.

## Patentansprüche

1. Heizungs- und Belüftungsvorrichtung für Innenräume von Kraftfahrzeugen mit einem Kanal für die Zufuhr von Kaltluft (12); mit einem Zuleitungs- und Aufheizkreislauf (18 20 ; 80), der an einen Kanal für die Zufuhr von kalter Luft (12) angeschlossen ist und dazu dient, einen Kaltluftstrom oder einen aufgeheizten Luftstrom zu erzeugen; mit einem Verteilungssystem (38), das an den Zuleitungs- und Aufheizkreislauf angeschlossen ist und einen Einlaß (36) für den kalten oder aufgeheizten Luftstrom, Kanäle für die Abfuhr von Luft wie ein Kanal zur Beschlagsentfernung (40), einen Lüftungskanal (52) und einen Kanal (60) für den unteren Teil des
"Fahrzeuginnenraums" umfaßt, die von diesem Lufteinlaß (36) gespeist werden und dazu dienen, über Verteilungsmittel (48, 64) den Luftstrom in die verschiedene Bereiche des Fahrzeuginnenraums zu verteilen, wobei der Kanal zur Beschlagsentfernung (40) zur Entfernung des Beschlags hinter der Windschutzscheibe (69) des Fahrzeugs mündet,
**dadurch gekennzeichnet**, daß sie einen zusätzlichen Kanal für die Beschlagsentfernung (66) - mit "Kanal für die Vorrangige Beschlagsentfernung" bezeichnet - umfaßt, der vom Verteilungssystem (38) getrennt ist und einen Einlaß (67), der mit dem Zuleitungs- und Aufheiheizkreislauf kommuniziert sowie einen Auslaß (68) aufweist, der hinter der Windschutzscheibe (69) mündet, eine Schließklappe (70), die sich zwischen einer Position - mit "vorrangiger Beschlagsentfernung" bezeichnet -, in der sie den Einlaß (36) des Verteilungssystems verschließt und einer Position - mit "normaler Einsatz" bezeichnet - bewegt, in der diese Klappe den Einlaß (67) des Kanals zur vorrangigen Beschlagsentfernung (66) verschließt sowie Steuermittel zur Verstellung der Schließklappe (70) zwischen den beiden genannten Positionen.

2. Vorrichtung nach Anspruch 1, mit einem Zuleitungs- und Aufheizkreislauf der einen Zweig zur Übertragung von Kaltluft (18), der sich zwischen dem Kanal für die Zufuhr von Kaltluft (12) und dem Einlaß (36) des Verteilungskreislaufs (38) befindet; einen Zweig zur Erwärmung der Luft (20), der sich zwischen dem Kanal für die Kaltluftzufuhr (12) und dem Einlaß (36) des Verteilungskreislaufs befindet und einen Wärmetauscher (22) enthält; und eine Mischklappe (30), die dazu dient die Verteilung der Luftmenge zwischen diesen beiden Zweigen (18, 20) zu variieren, umfaßt, **dadurch gekennzeichnet**, daß sie einen zusätzlichen Zufuhrkanal für Kaltluft (72), der direkt in den Zweig zur Erwärmung der Luft (20) vor dem Wärmetauscher (22) mündet sowie eine zusätzliche Mischklappe (74) umfaßt, die zwischen einer Schließposition für die zusätzliche Zufuhr (72) und einer Öffnungsposition dieser Zufuhr (72) verstellbar ist.

3. Vorrichtung nach Anspruch 2, **dadurch gekennzeichnet**, daß sich die zusätzliche Mischklappe (74) synchron mit der Schließklappe (70) so verstellen läßt, daß sie sich in Öffnungsposition befindet, wenn die Schließklappe in Stellung der vorrangigen Beschlagsentfernung und in Schließposition befindet, wenn sich die Schließklappe in Position für den normalen Einsatz befindet.

4. Vorrichtung nach Anspruch 1, in der der Zuleitungs- und Aufheizkreislauf einen einzigen Zweig für die Zufuhr (80) umfaßt, der sich zwischen dem Kanal für die Zufuhr der Kaltluft (12) und dem Einlaß (36) des Verteilungskreislaufs (38) befindet, wobei der Zweig für die Zufuhr (89) einen Wärmetauscher (82) enthält, der von einem wärmeübertragenden Fluid über ein dazwischenliegendes Element zur Steuerung der Durchflußmenge (84) gespeist wird**, dadurch gekennzeichnet**, daß sie Mittel (86) zur Steuerung des Elementes zur Steuerung der Durchflußmenge (84) umnfaßt, die synchron mit den Steuermitteln zur Verstellung der Schließklappe (70) so arbeiten, daß die Menge des wärmeübertragenden Fluids, das durch den Wärmetauscher (82) strömt, sich erhöht oder auf dem maximalen Wert gehalten wird, wenn sich die Schießklappe (70) in der Position der vorrangigen Beschlagsentfernung befindet.

5. Vorrichtung nach einem der Ansprüche 1 bis 4, **dadurch gekennzeichnet**, daß sie einen Fühler (76) umfaßt, der dazu dient, das Vorhandensein von Beschlag oder die Gefahr des Aufkommens von Beschlag auf der Windschutzscheibe (69) zu ermitteln.

6. Vorrichtung nach Anspruch 5, **dadurch gekennzeichnet**, daß der Fühler (76) mit einem elektronischen Modul (78) verbunden ist, das dazu dient, die Schließklappe (70) und gegebenenfalls andere mit der Schließklappe synchronisierte Steuermittel zu steuern.

7. Vorrichtung nach Anspruch 6, die außerdem einen Luftpulsator (16) umfaßt, der dazu dient, Kaltluft durch den Zufuhrkanal (12) zu leiten,
**dadurch gekennzeichnet**, daß das Modul (78) dazu geeignet ist, die Geschwindigkeit des Pulsators (16) auf einen erhöhten Wert oder auf einen maximalen Wert zu bringen, wenn die Schließklappe (70) sich in der Position der vorrangigen Beschlagsentfernung befindet.

8. Vorrichtung nach einem der vorhergehenden Ansprüche, in der der Kanal für die Luftzufuhr (12) mit einer Einlaßöffnung (88) verbunden ist, die über eine Klappe zur Luftzufuhr (90) gesteuert wird, die verstellbar zwischen einer Schließposition und einer Öffnungsposition der Öffnung (88) ist,
**dadurch gekennzeichnet**, daß sie Mittel (92) zum Steuern der Klappe für die Luftzufuhr (90) umfaßt, die synchron mit den Steuermitteln (94) der Schließklappe (70) so arbeiten, daß die Klappe für die Luftzufuhr (90) sich unbedingt in Öffnungsposition befindet, wenn die Schließklappe (70) sich in der Position "vorrangiges Defrosten befindet".
